# EUROPEAN PATENT APPLICATION

(11) **EP 4 686 538 A1**
(43) Date of publication of application: **04.02.2026**
(21) Application number: 24202898.3
(22) Date of filing: 26.09.2024
(51) Int. Cl.: B26F 1/18, A47C 27/14, B26F 1/22

(54) **STRETCHABLE FOAM, FURNITURE, AND CUTTING TOOL**

(30) Priority: 01.08.2024 CN 202421853831 U
(71) Applicant: Guangdong Duopuda High-tech Materials Co., Ltd., Foshan City, Guangdong Province 528500 (CN)
(72) Inventor: WANG, Feng, Foshan City 528500 (CN)
(74) Representative: Bryn Aarflot AS

(57) **Abstract**

The present invention provides a stretchable foam, furniture, and a cutting tool, relating to the technical field of foam production. The stretchable foam is provided with a slit group, and the slit group includes two rows of slits. Each row of slits includes multiple cutting units arranged at intervals. Each cutting unit includes a first straight edge and a second straight edge connected to each other, and the first straight edge and the second straight edge form an opening. The openings of the multiple cutting units in the first row of slits and the multiple cutting units in the second row of slits are arranged in opposite directions and are staggered in sequence. The adjacent first straight edge and second straight edge of two adjacent cutting units in the first row of slits are located within the opening of the same cutting unit in the second row of slits. The stretchable foam can reduce material waste, save costs, and improve production efficiency.

## Description

### TECHNICAL FIELD

The present invention relates to the technical field of foam production, and specifically to a stretchable foam, a furniture, and a cutting tool.

### BACKGROUND ART

Polyurethane foam sponge (hereinafter referred to as "foam") has a porous honeycomb structure, providing excellent softness, elasticity, water absorption, and water tolerance. Due to its lightweight, softness, and shock absorption properties, it is widely used in various fields such as furniture manufacturing, transportation, sports equipment, and the construction industry. Currently, the production of foams in the market is mainly achieved through polymer chemical reactions, forming foam body. In practical applications, cutting the foam body is an essential process to meet various functional needs.

The current foam cutting technology is to cut the foam in equal sizes according to the dimensions required for the application scenario. For example, a 2-meter-long foam cushion needs to be cut in equal proportions. This process results in material waste. In the furniture manufacturing industry, especially in the production of sofas and soft seats, it is necessary to punch holes in the foam to enhance the breathability of the foam materials and increase comfort when people sit on it. The holes are often arranged in regular patterns, such as circular holes or honeycomb-shaped holes. However, the existing methods for opening the holes all include making the required holes on the foam plate, with the removed portions being discarded directly. This causes significant material waste and is not conducive to energy conservation, material reduction, and cost reduction.

### SUMMARY

The objective of the present invention is to provide a stretchable foam, a furniture, and a cutting tool, which can improve material utilization, reduce material waste, save costs, and improve production efficiency.

The embodiments of the present invention are implemented as follows.

A stretchable foam is provided by the present invention. The stretchable foam is provided with a slit group. The slit group includes a first row of slits and a second row of slits, and each row of the slits includes multiple cutting units arranged at intervals. Each cutting unit includes a first straight edge and a second straight edge connected to each other, and the first straight edge and the second straight edge form an opening.

The openings of the multiple cutting units in the first row of slits and the multiple cutting units in the second row of slits are arranged in opposite directions and are staggered in sequence.

Adjacent first straight edge and second straight edge of two adjacent cutting units in the first row of slits are located within the opening of the same cutting unit in the second row of slits.

In optional embodiments, multiple cutting units in the same row of the slits are arranged at equal intervals along a first direction, the first row of slits and the second row of slits in the same slit group are arranged at equal intervals in a second direction, and the first direction and the second direction form an angle of 60 degrees to 120 degrees.

In optional embodiments, in a single cutting unit, a spacing between the first straight edge and the second straight edge in the first direction is L1, and a maximum depth of the opening in the second direction is L2, with a ratio of L2 to L1 of 0.3 to 0.7.

In optional embodiments, in the same slit group, the minimum spacing between the first row of slits and the second row of slits in the second direction is L3, and L3 is 10% to 50% of L2.

In optional embodiments, a spacing between adjacent first straight edge and second straight edge of two adjacent cutting units in the same row of slits is L4, and L4 is 20% to 60% of L1.

In optional embodiments, multiple rows of the slit groups are arranged at equal intervals on the stretchable foam.

In optional embodiments, the cutting unit further includes a connecting edge, with the first straight edge, the connecting edge, and the second straight edge sequentially connected; the first straight edge and the second straight edge are arranged opposite to each other; and the first straight edge, the connecting edge, and the second straight edge form an opening.

In optional embodiments, the connecting edge is curved, zigzag, or straight.

In optional embodiments, the connecting edge includes a first straight section, a second straight section, and a third straight section that are sequentially connected. One end of the first straight section that is away from the second straight section is connected to the first straight edge, and one end of the third straight section that is away from the second straight section is connected to the second straight edge.

In optional embodiments, in the same opening, a spacing between the first straight edge and the second straight edge in the first direction is equal to a length of the second straight section in the first direction, and the first direction is an arrangement direction of multiple cutting units in the same row of slits.

In optional embodiments, a spacing between two adjacent slit groups in the second direction is L5, a maximum depth of the opening in the second direction is L2, and L5 is 1.1 times to 2.5 times L2.

In optional embodiments, the cutting unit further includes a closed edge, and the first straight edge, the second straight edge, and the closed edge are sequentially connected end to end.

In optional embodiments, a thickness of the stretchable foam ranges from 1cm to 20cm.

The present invention provides furniture that includes the stretchable foam according to any one of the foregoing embodiments.

The present invention provides a cutting tool, which is configured to form the slit groups on the stretchable foam in the aforementioned embodiments.

The embodiments of the present invention include the following beneficial effects.

The present invention provides a stretchable foam. During the cutting process, only a slit is punched on the stretchable foam, and then the foam is stretched according to the shape of the slit, and the slit is deformed through stretching, thereby obtaining the corresponding hole structure on the stretchable foam. The cutting method of forming holes through stretching can almost achieve zero cutting loss, thus greatly improving material utilization and saving costs. Additionally, reducing the waste of the stretchable foam can lower the required overall production volume of the foam, thereby reducing environmental pollution.

The present invention further provides a furniture, which includes the aforementioned stretchable foam, not only improves the utilization of the stretchable foam, reduces the total production volume of the foam, and increases production efficiency, but also forms stable hole structures with good breathability and easily controllable softness, thus allowing a more comfortable user experience.

### BRIEF DESCRIPTION OF DRAWINGS

To more clearly illustrate the technical solutions of the embodiments of the present invention, the following will briefly introduce the drawings used in the embodiments. It should be understood that the following drawings only show some embodiments of the present invention, and therefore they should not be regarded as a limitation on the scope. Those ordinary skilled in the art can also obtain other related drawings based on these drawings without inventive effort.
FIG. 1 is a structural schematic diagram of a stretchable foam before stretching provided in the present invention;
FIG. 2 is a structural schematic diagram of a slit group of a stretchable foam provided in the present invention;
FIG. 3 is a structural schematic diagram of a cutting unit of a stretchable foam provided in the present invention;
FIG. 4 is a structural schematic diagram of a cutting unit of a stretchable foam provided in the present invention;
FIG. 5 is a structural schematic diagram of a cutting unit of a stretchable foam provided in the present invention;
FIG. 6 is a structural schematic diagram of a cutting unit of a stretchable foam provided in the present invention;
FIG. 7 is a structural schematic diagram of a cutting unit of a stretchable foam provided in the present invention;
FIG. 8 is a structural schematic diagram of a stretchable foam after stretching provided in the present invention;
FIG. 9 is a structural schematic diagram of a stretchable foam before stretching provided in the present invention;
FIG. 10 is a structural schematic diagram of a cutting unit of a stretchable foam provided in the present invention;
FIG. 11 is a structural schematic diagram of a stretchable foam after stretching provided in the present invention;
FIG. 12 is a structural schematic diagram of a stretchable foam before stretching provided in the present invention;
FIG. 13 is a structural schematic diagram of a cutting unit of a stretchable foam provided in the present invention;
FIG. 14 is a structural schematic diagram of a stretchable foam after stretching provided in the present invention; and
FIG. 15 is a structural schematic diagram of a cutting tool suitable for a stretchable foam provided in the present invention.

Reference numerals: 100 - stretchable foam; 200 - slit; 210 - slit group; 220 - first row of slits; 230 - second row of slits; 241 - first straight edge; 242 - second straight edge; 243 - connecting edge; 244 - first straight section; 245 - second straight section; 246 - third straight section; 247 - opening; 248 - closed edge; 300 - hole structure; 310 - connecting rib; 400 - cutting tool.

### DETAILED DESCRIPTION OF EMBODIMENTS

In order to make the objective, technical solutions, and advantages of the embodiments of the present invention clearer, the following description will provide a clear and comprehensive explanation of the technical solutions in the embodiments of the present invention with reference to the drawings of the present invention. Clearly, the described embodiments are part of the embodiments of the present invention and not the entire embodiments. The components of embodiments of the present invention which are generally described and illustrated in the drawings herein can be arranged and designed in a variety of different configurations.

Accordingly, the following detailed description of the embodiments of the present invention provided in the drawings is not intended to limit the scope of the present invention for which protection is claimed, but merely represents selected embodiments of the present invention. Based on the embodiments in the present invention, all other embodiments obtained by those of ordinary skill in the art without making inventive efforts are within the scope of protection of the present invention.

It should be noted that similar numerals and letters denote similar terms in the following drawings so that once an item is defined in one drawing, it does not need to be further discussed in subsequent drawings.

In the description of the present invention, it should be noted that the orientation or positional relationship indicated by the term "center", "up", "down", "left", "right", "vertical", "horizontal", "inside", "outside", etc. is based on the orientation or positional relationship shown in the drawings or the orientation or positional relationship in which the product of the present invention is customarily placed when used. It is intended only to facilitate the description of the present invention and to simplify the description, and not to indicate or imply that the devices or elements referred to must have a particular orientation, be constructed and operated in a particular orientation. Accordingly, it is not to be construed as a limitation of the present invention. In addition, the terms "first", "second", and "third" are only used to distinguish the descriptive and are not to be construed as indicating or implying relative importance.

In addition, the terms such as "horizontal" and "vertical" do not mean that elements are required to be absolutely horizontal or overhanging, but can be slightly inclined. For example, "horizontal" only means that its direction is more horizontal than "vertical", and it does not mean that the structure must be completely horizontal, but can be slightly inclined.

In the description of the present invention, it is further important to note that unless otherwise clearly stipulated and limited, the terms "provide", "mount", "interconnect", and "connect" should be understood in a broad sense, for example, it can be a fixed connection, a detachable connection, or an integral connection; it can be a mechanical connection or an electrical connection; and it can be a direct connection, an indirect connection through an intermediary, or an internal communication between two components. Those of ordinary skill in the art can understand the meanings of the above terms in the present invention according to specific situations.

During the foaming process of the foam, a large amount of harmful gases are produced and a significant amount of heat is dissipated, causing a certain degree of environmental pollution. The existing method of perforating the foam is to punch out the required hole structures on the foam board, and the punched-out parts are directly discarded, causing a large waste of foam material, which is not conducive to energy saving and material reduction, and increases costs. Considering the loss during the cutting process, the production output of the foam is increased during manufacturing, which increases costs and simultaneously increases the amount of polluting gases discharged into the atmosphere, exacerbating environmental pollution.

In view of this, the present invention provides a stretchable foam 100, which can reduce the loss of stretchable foam 100 during the cutting process, improve the utilization rate of stretchable foam 100, reduce costs, and reduce environmental pollution.

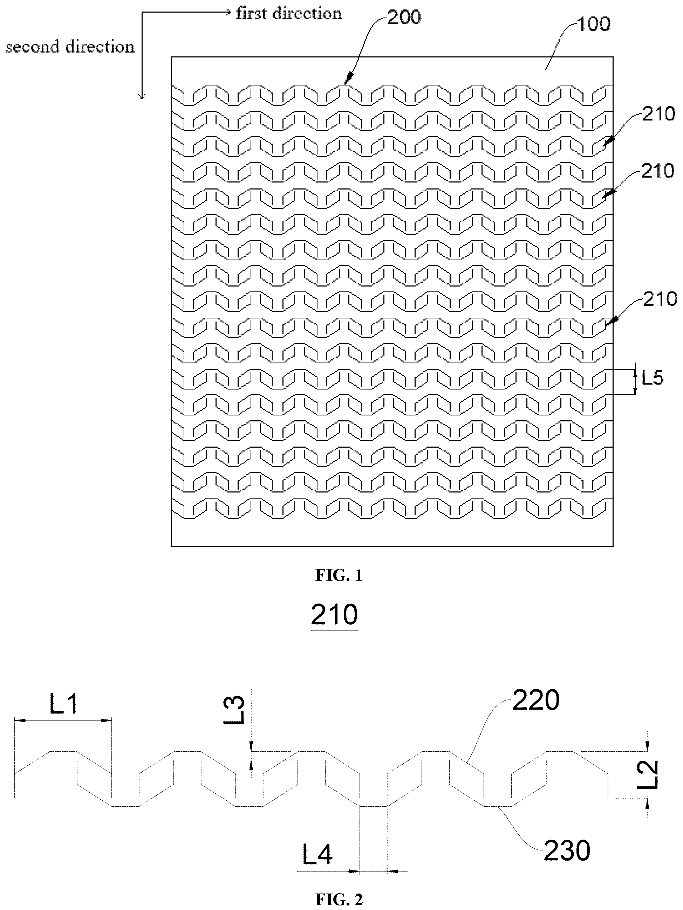

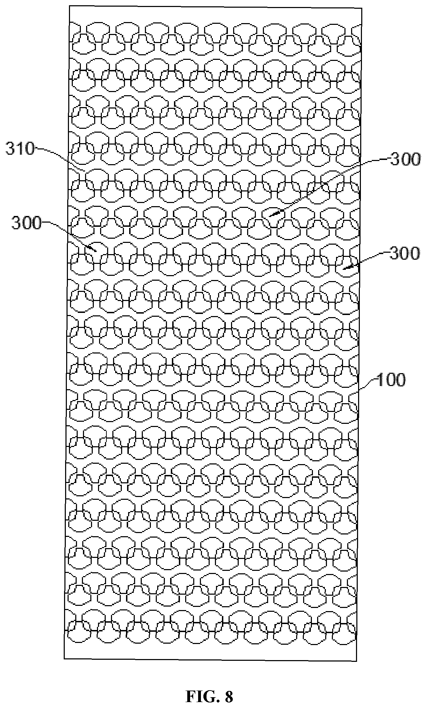

Referring to FIG. 1 to FIG. 3, the present embodiment provides a stretchable foam 100. During the cutting process, only a slit 200 is punched on the stretchable foam 100, and then the stretchable foam 100 is stretched according to the shape of the slit 200, and the slit 200 is deformed through stretching, thereby obtaining the corresponding hole structure 300 on the stretchable foam 100 (referring to FIG. 8). The cutting method of forming holes through stretching can almost achieve zero cutting loss, thus greatly improving material utilization and saving costs.

The stretchable foam 100 is provided with a slit group 210, and the slit group 210 includes two rows of slits 200 that are mated with each other, i.e., the first row of slits 220 and the second row of slits 230. Each row of slits 200 include multiple cutting units arranged at intervals. Each cutting unit includes a first straight edge 241 and a second straight edge 242 connected to each other, and the first straight edge 241 and the second straight edge 242 form an opening 247. The openings 247 of the multiple cutting units in the first row of slits 220 and the multiple cutting units in the second row of slits 230 are arranged in opposite directions and are staggered in sequence. It can be understood that the cutting units in the second row of slits 230 are configured by rotating the cutting units in the first row of slits 220 by 180 degrees. In other words, the structures of the cutting units in the two rows of slits 200 are the same, except that the layout angles are adjusted.

In a slit group 210, the adjacent first straight edge 241 and second straight edge 242 of two adjacent cutting units in the first row of slits 220 are located within the opening 247 of the same cutting unit in the second row of slits 230. It can be understood that in the same row of slits 200, the direction of all openings 247 is consistent. The openings 247 in the two rows of slits 200 are opposite to each other and staggered in sequence.

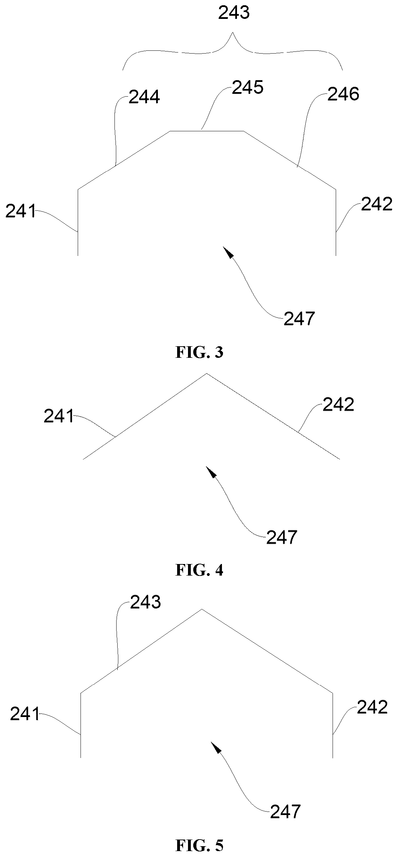

In combination with FIG. 4, optionally, the first straight edge 241 and the second straight edge 242 can be directly connected or indirectly connected. For example, the first straight edge 241 and the second straight edge 242 are directly connected and arranged at an angle. The angle formed by the first straight edge 241 and the second straight edge 242 is 30 degrees to 150 degrees, such as 30 degrees, 40 degrees, 45 degrees, 60 degrees, 70 degrees, 80 degrees, 90 degrees, 100 degrees, 120 degrees, or any value between 30 degrees and 150 degrees.

Multiple cutting units in the same row of slits 200 are arranged at intervals along the first direction, and the two rows of slits 200 in the same slit group 210 are arranged at intervals along the second direction. That is, the cutting units are arranged at intervals along the first direction, and the slit group 210 is arranged at intervals along the second direction. The first direction and the second direction form an angle of 60 to 120 degrees. In the embodiment, the first direction and the second direction are approximately at 90 degrees. The first direction and the second direction are roughly perpendicular.

In combination with FIG. 3, the cutting unit further includes a connecting edge 243. The first straight edge 241, the connecting edge 243, and the second straight edge 242 are sequentially connected. The first straight edge 241 and the second straight edge 242 are arranged oppositely. The first straight edge 241, the connecting edge 243, and the second straight edge 242 form an opening 247.

In a single cutting unit, the spacing between the first straight edge 241 and the second straight edge 242 in the first direction is L1, and the maximum depth of the opening 247 in the second direction is L2, with a ratio of L2 to L1 of 0.3 to 0.7, wherein L1 can also be understood as the maximum width of a single cutting unit in the first direction. L2 can also be understood as the maximum length of a single cutting unit in the second direction.

Optionally, in the same slit group 210, the minimum spacing between the first row of slits 220 and the second row of slits 230 in the second direction is L3, and L3 is 10% to 50% of L2.

The spacing between the adjacent first straight edge 241 and the second straight edge 242 of two adjacent cutting units in the same row of slits 200 is L4, and L4 is 20% to 60% of L1. It can be understood that in the size design of L3 and L4, if the size is too large, a stretching rebound is likely to occur, and the stretched structure will be unstable. If the size is too small, breakage is likely to occur during the stretching process. To balance the structural stability and structural strength of the stretched structure, in the embodiment, L1 is about 70mm, L2 is about 32mm, L3 is about 8mm, and L4 is about 20mm.

Optionally, multiple rows of slit groups 210 are arranged at equal intervals on the stretchable foam 100. The number of slit groups 210 is a natural number greater than or equal to 2, for example, 2, 3, 4, 5, 6, 10, or more. The specific number of slit groups 210 depends on the size and specifications of the stretchable foam 100 and can be any positive integer greater than or equal to 2.

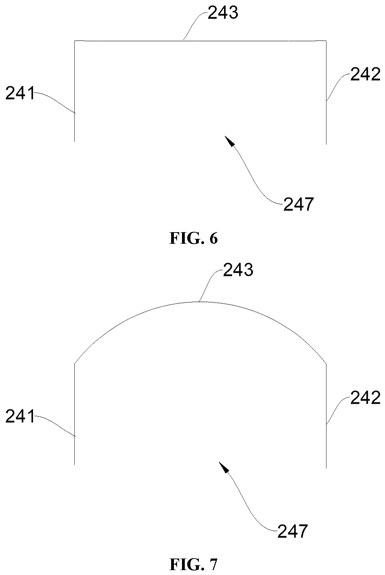

In combination with FIG. 5 to FIG. 7, optionally, the connecting edge 243 is curved, zigzag, or straight. For example, the connecting edge 243 is arch-shaped or semicircular, etc. The contour of the slit 200 in the cutting unit can be similar to a rectangle, square, pentagon, hexagon, or octagon with an opening 247 on one side.

Optionally, in combination with FIG. 3, the connecting edge 243 includes a first straight section 244, a second straight section 245, and a third straight section 246 that are sequentially connected. One end of the first straight section 244 that is away from the second straight section 245 is connected to the first straight edge 241, and one end of the third straight section 246 that is away from the second straight section 245 is connected to the second straight edge 242. In this way, the contour of the slit 200 in the cutting unit is similar to a hexagon with an opening 247 on one side.

Optionally, in the same opening 247, the spacing between the first straight edge 241 and the second straight edge 242 in the first direction is equal to the length of the second straight section 245 in the first direction. The first direction is the arrangement direction of multiple cutting units in the same row of slits 200.

The spacing between two adjacent slit groups 210 in the second direction is L5, and the maximum depth of the opening 247 in the second direction is L2, and L5 is 1.1 times to 2.5 times L2. In the embodiment, L5 is about 60mm. Of course, it can also be designed as 40mm, 45mm, 50mm, 55mm, 65mm, 70mm, 75mm, 80mm, or any value between 35mm and 80mm.

In the embodiment, the stretchable foam 100 is suitable for stretchable foam 100 with a thickness of 1cm to 20cm. Optionally, the slit 200 cuts through in the thickness direction of the stretchable foam 100. That is, the cutting depth of the slit 200 is the thickness of the stretchable foam 100. The stretchable foam 100 can be made of pearl wool or foam, which has good deformation and recovery ability.

When stretching the stretchable foam 100, a pulling force is applied along the second direction, causing the slit 200 to deform, increasing the length of the stretchable foam 100 in the second direction, and finally obtaining a stable hole structure 300. Through stretching, the length of the stretchable foam 100 in the second direction can be increased to 1.1 times to 2 times the original length. For example, the original 1m of stretchable foam 100 can be stretched to about 2m of stretchable foam 100. The stretched stretchable foam 100 is arranged with a stable hole structure 300, which provides better breathability and a more comfortable user experience when used in products such as sofas, seats, beds, etc.

For example, if the cutting unit adopts the structure shown in FIG. 3, after the stretchable foam 100 is stretched, the obtained stretchable foam 100 with a hole structure 300 is as shown in FIG. 8.

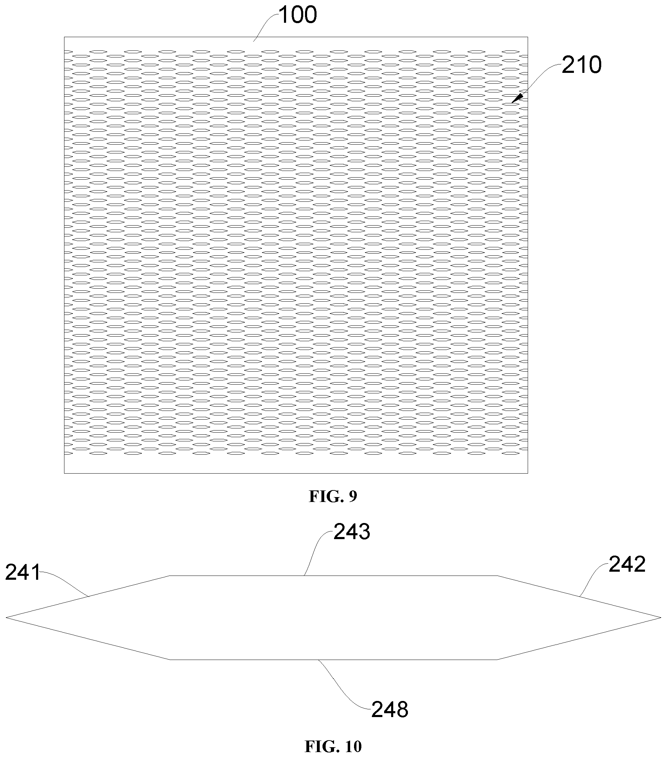

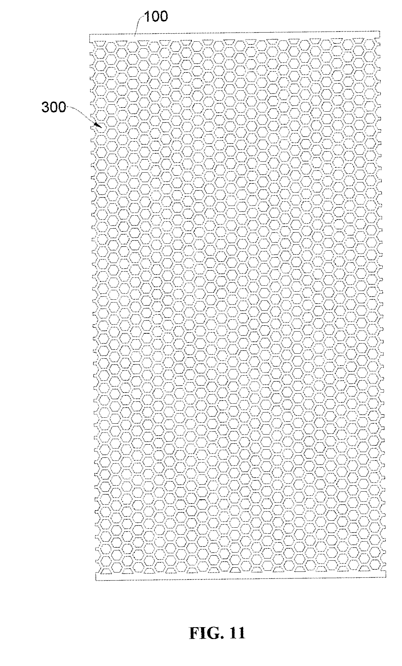

In combination with FIG. 9 to FIG. 11, in one or more optional embodiments, the cutting unit further includes a closed edge 248. The first straight edge 241, the second straight edge 242, and the closed edge 248 are sequentially connected end to end. That is, each cutting unit is in a closed shape, as shown in FIG. 10, where each cutting unit is hexagonal. Optionally, the hexagon is elongated. The length between the two ends of the hexagon in the first direction is much greater than the length between the two ends in the second direction. For example, the length between the two ends of the hexagon in the first direction is about 2 to 5 times the length between the two ends in the second direction. If the shape of the slit group 210 is as shown in FIG. 9, the structure of the stretched stretchable foam 100 is approximately honeycomb-shaped, as shown in FIG. 11.

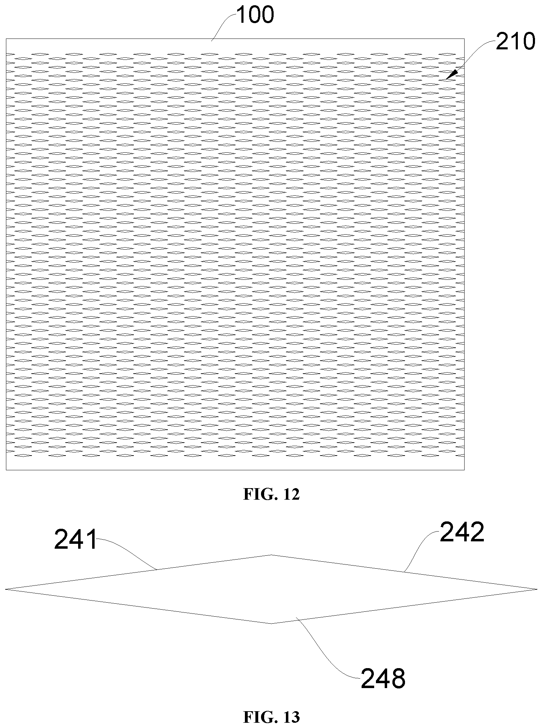

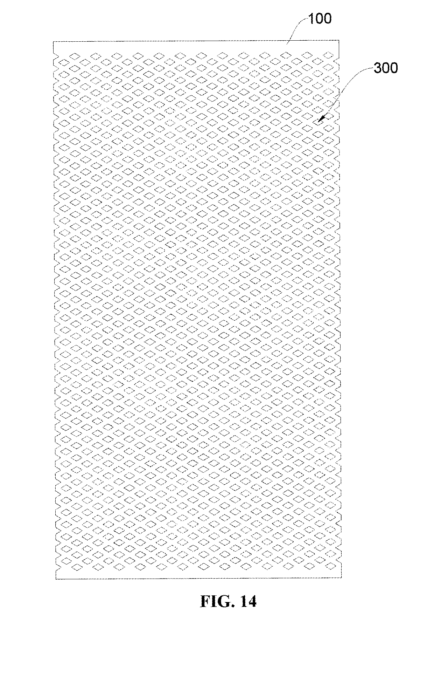

In combination with FIG. 12 to FIG. 14, in one or more optional embodiments, each cutting unit is in a closed shape, as shown in FIG. 13, where each cutting unit is quadrilateral. Optionally, the quadrilateral is a parallelogram, optionally a rhombus. The length between the two ends of the rhombus in the first direction is much greater than the length between the two ends in the second direction. For example, the length between the two ends of the rhombus in the first direction is about 2 to 5 times the length between the two ends in the second direction. If the shape of the slit group 210 is as shown in FIG. 11, the structure of the stretched stretchable foam 100 is as shown in FIG. 14.

It can be understood that the closed edge 248 can be a straight edge, curved edge, arc edge, or zigzag edge, etc. The number of straight edges, curved edges, arc edges, or zigzag edges is not limited, and it can also be a combination of at least two of the above lines. The closed edge 248 and the connecting edge 243 can coexist in the cutting unit, or only one of them exists in the cutting unit, which is not specifically limited herein.

The present invention provides a stretchable foam 100, which, during the process of forming hole structures 300, does not result in material loss, is simple to operate, convenient in process, and produces stable and reliable finished structures. This is beneficial for improving foam production efficiency, lowering costs, and reducing environmental pollution.

It should be noted that in the stretchable foam 100 provided by the embodiment, the larger the size of the holes formed after stretching is, the wider the connecting ribs 310 between the corresponding holes are, thereby allowing a higher hardness of the stretchable foam 100. If the holes formed after stretching are smaller, the connecting ribs 310 between the corresponding holes are narrower, leading to a lower hardness of the stretchable foam 100, which exhibits a softer characteristic. By adjusting the shape and distribution of the slit 200, a stretchable foam 100 with a hardness of approximately 30D-100D can be obtained, which is suitable for various applications with different hardness requirements, making it widely applicable.

The embodiment also provides furniture that includes the aforementioned stretchable foam 100. The furniture can include but is not limited to beds, sofas, chairs, pillows, or cushions.

The production process of the stretchable foam 100 provided in the embodiment includes the foaming step, cutting step, and stretching step of the stretchable foam 100.

The foaming step for the stretchable foam 100 includes the following.
(1) Nucleation reaction: The silicone oil acts as an intermediary, mixing the components together evenly, and forming a nucleus. The nucleus is the hole of the formed foam. A duration for the nucleation reaction is approximately 3 to 5 seconds.
(2) Milky reaction: A process of thickening catalyzed by various materials, with a reaction time about 6 to 12 seconds.
(3) Foaming reaction: As the consistency of the material gradually increases, the heat and gas generated by the reaction between toluene diisocyanate (TDI) and water cause the material to foam and expand in volume. The reaction time is between 70 to 120 seconds.
(4) Gelation reaction: When the temperature of the foam reaches a certain level, the two main materials begin to gel under the catalysis of catalyst T9, with a gelation reaction time about 30 to 70 seconds. This process is called the gelation reaction.
(5) Curing reaction: After gelation and degassing, the foam enters the post-curing reaction stage.

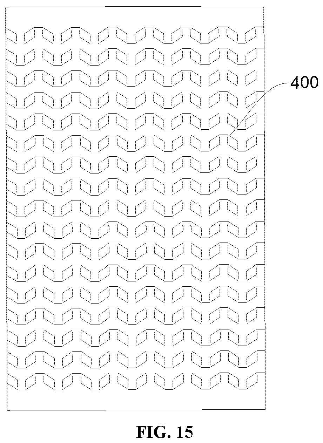

The cutting step for the stretchable foam 100 includes the following.
(1) The designed cutting tool model is mounted on the equipment. Optionally, referring to FIG. 15, the shape of the cutting tool matches the shape of the slit 200 on the stretchable foam 100. For example, a cutting tool can be shaped to match a slit group 210, allowing the cutting tool to form a row of slit groups 210 on the stretchable foam 100 with each cut. By moving the stretchable foam 100 or the cutting tool, multiple cuts can form the predetermined slits 200 before stretching on the stretchable foam 100. Alternatively, the size of each cutting tool can be adapted to that of match multiple rows of slit groups 210, for example, adapted to match that of two, three, four, five, or more rows of slit groups 210. This allows multiple rows of slit groups 210 to be formed in a single cut, thereby improving cutting efficiency. Additionally, multiple sets of cutting tools can be arranged to form the complete slits 200 on the stretchable foam 100 through one or more cuts, thereby enhancing cutting efficiency and cutting precision.
(2) The stretchable foam 100 is placed on a workbench or a movable platform on the workbench. Optionally, the tray is arranged on the workbench in a movable manner, and the stretchable foam 100 is placed in the movable tray. The cutting tool 400 is arranged above the workbench, and the stretchable foam 100 is moved to the appropriate position. The cutting tool 400 descends to cut the stretchable foam 100. After completing one cut, the cutting tool 400 rises back to its initial position, the stretchable foam 100 moves a preset distance, and the cutting tool 400 descends again to cut the stretchable foam 100. This process repeats until all slits 200 on the stretchable foam 100 are formed.

It is understood that during cutting, the cutting tool 400 cuts the stretchable foam 100 at an appropriate speed and pressure to ensure that the slits 200 are smooth. Optionally, the cutting tool 400 is coated with Teflon to facilitate the demolding of the cutting tool 400. That is, the cutting tool 400 can be smoothly separated from the stretchable foam 100 during the return stroke.

(3) The cut stretchable foam 100 is moved to the stretching platform. The stretchable foam 100 is stretched along the second direction of the stretchable foam 100, causing the shape of the slits 200 to change and forming a stable hole structure 300. Optionally, the length of the stretchable foam 100 after stretching is approximately twice its original length.

The cutting tool provided in the embodiment is configured to punch and form slit groups 210 on the aforementioned stretchable foam 100. The shape of the cutting tool is the same size as the shape of one or more rows of slit groups 210 on the stretchable foam 100.

In summary, the stretchable foam 100, the cutting tool, and the furniture provided by the embodiments of the present invention offer the following beneficial effects.

The present embodiment provides a stretchable foam 100. During the cutting process, only a slit 200 is punched on the stretchable foam 100, and then the foam is stretched according to the shape of the slit 200, and the slit 200 is deformed through stretching, thereby obtaining the corresponding hole structure 300 on the stretchable foam 100. The cutting method of forming holes through stretching can almost achieve zero cutting loss, thus greatly improving material utilization and saving costs. Reducing the waste of the stretchable foam 100 lowers the required overall production volume of the foam, thereby reducing environmental pollution.

The furniture provided by the embodiment, which includes the aforementioned stretchable foam 100, not only improves the utilization of the stretchable foam 100, reduces the total production volume of the stretchable foam 100, and increases production efficiency, but also forms stable hole structures 300 with good breathability and easily controllable softness, thus allowing a more comfortable user experience.

The cutting tool provided in the embodiment is configured to punch and form slit groups 210 on the aforementioned stretchable foam 100, offering high cutting efficiency and beneficial to improve the production efficiency of the stretchable foam 100.

The above is only a preferred embodiment of the present invention, which is not intended to limit, and the present invention may have various changes and variations for those skilled in the art. Any modification, equivalent substitution, improvement, etc. made within the spirit and principles of the present invention shall be included in the scope of protection of the present invention.

## Claims

1. A stretchable foam (100), **characterized in that** the stretchable foam (100) is provided with a slit group (210), the slit group (210) comprises a first row of slits (220) and a second row of slits (230), and each row of the slits (200) comprises multiple cutting units arranged at intervals; each cutting unit comprises a first straight edge (241) and a second straight edge (242) connected to each other, and the first straight edge (241) and the second straight edge (242) form an opening (247);
openings (247) of the multiple cutting units in the first row of slits (220) and the multiple cutting units in the second row of slits (230) are arranged in opposite directions and are staggered in sequence; and
adjacent first straight edge (241) and second straight edge (242) of two adjacent cutting units in the first row of slits (220) are located within an opening (247) of the same cutting unit in the second row of slits (230).

2. The stretchable foam (100) according to claim 1, wherein the multiple cutting units in the same row of the slits (200) are arranged at equal intervals along a first direction, the first row of slits (220) and the second row of slits (230) in the same slit group (210) are arranged at equal intervals in a second direction, and the first direction and the second direction form an angle of 60 degrees to 120 degrees.

3. The stretchable foam (100) according to claim 2, wherein in a single cutting unit, a spacing between the first straight edge (241) and the second straight edge (242) in the first direction is L1, and a maximum depth of the opening (247) in the second direction is L2, with a ratio of L2 to L1 of 0.3 to 0.7.

4. The stretchable foam (100) according to claim 3, wherein in the same slit group (210), a minimum spacing between the first row of slits (220) and the second row of slits (230) in the second direction is L3, and L3 is 10% to 50% of L2.

5. The stretchable foam (100) according to claim 3, wherein a spacing between adjacent first straight edge (241) and second straight edge (242) of the two adjacent cutting units in the same row of the slits (200) is L4, and L4 is 20% to 60% of L1.

6. The stretchable foam (100) according to claim 1, wherein multiple rows of the slit groups (210) are arranged at equal intervals on the stretchable foam (100).

7. The stretchable foam (100) according to claim 1, wherein each cutting unit further comprises a connecting edge (243), with the first straight edge (241), the connecting edge (243), and the second straight edge (242) sequentially connected; the first straight edge (241) and the second straight edge (242) are arranged opposite to each other; and the first straight edge (241), the connecting edge (243), and the second straight edge (242) form an opening (247).

8. The stretchable foam (100) according to claim 7, wherein the connecting edge (243) is curved, zigzag, or straight.

9. The stretchable foam (100) according to claim 8, wherein the connecting edge (243) comprises a first straight section (244), a second straight section (245), and a third straight section (246) that are sequentially connected, one end of the first straight section (244) that is away from the second straight section (245) is connected to the first straight edge (241), and one end of the third straight section (246) that is away from the second straight section (245) is connected to the second straight edge (242).

10. The stretchable foam (100) according to claim 9, wherein in the same opening (247), a spacing between the first straight edge (241) and the second straight edge (242) in a first direction is equal to a length of the second straight section (245) in the first direction, and the first direction is an arrangement direction of the multiple cutting units in the same row of the slits (200).

11. The stretchable foam (100) according to claim 1, wherein a spacing between two adjacent slit groups (210) in a second direction is L5, a maximum depth of the opening (247) in the second direction is L2, and L5 is 1.1 times to 2.5 times L2.

12. The stretchable foam (100) according to claim 1, wherein each cutting unit further comprises a closed edge (248), and the first straight edge (241), the second straight edge (242), and the closed edge (248) are sequentially connected end to end.

13. The stretchable foam (100) according to any one of claims 1 to 12, wherein a thickness of the stretchable foam (100) ranges from 1cm to 20cm.

14. A furniture, **characterized by** comprising the stretchable foam (100) according to any one of claims 1 to 13.

15. A cutting tool (400), **characterized by** being configured to form the slit group (210) on the stretchable foam (100) according to any one of claims 1 to 13.
